# EUROPEAN PATENT APPLICATION

(11) **EP 4 461 456 A1**
(43) Date of publication of application: **13.11.2024**
(21) Application number: 23824068.3
(22) Date of filing: 13.04.2023
(51) Int. Cl.: B23K 35/30, B23K 35/02

(54) **LOW-SLAG WIRE WITH EXCELLENT WELDABILITY**

(30) Priority: 16.06.2022 KR 20220073596
(71) Applicant: Kiswel Ltd., Busan 47018 (KR)
(72) Inventor: KIM, Yong Chul, Changwon-si, Gyeongsangnam-do 51544 (KR); JUNG, Su Kyung, Changwon-si, Gyeongsangnam-do 51544 (KR); SONG, Chang Uk, Changwon-si, Gyeongsangnam-do 51544 (KR); PARK, Kyeong Il, Changwon-si, Gyeongsangnam-do 51544 (KR)
(74) Representative: Beck & Rössig European Patent Attorneys
(86) International application number: PCT/KR2023/005019
(87) International publication number: WO 2023/243842

(57) **Abstract**

An embodiment of the present invention provides a low-slag wire with excellent weldability comprising, in weight % relative to the total weight thereof, 0.001-0.30% of C, 0.001-0.10% of Si, 0.50-3.00% of Mn, 0.030% or less of P, 0.020% or less of S, 0.001-0.100% of Ni, at least one species of 0.50% or less of Ti, 0.30% or less of Al, 0.50% or less of Nb, 0.10% or less of V, and 0.10% or less of Zr, at least one of 0.001-0.100% of Cr, 0.001-0.500% of Mo, and 0.50% or less of Cu, and the balance being Fe and inevitable impurities.

## Description

### Technical Field

The present invention relates to a welding wire used for gas metal arc welding using a shielding gas, and more particularly, to a low-slag wire with excellent weldability, which is capable of improving the electrodeposition coating properties of a bead surface of a weld zone.

### Background Art

Generally, as a method of protecting automobile parts from a corrosive environment, a method of electrodeposition coating after arc welding is employed. However, when electrodeposition coating is performed after welding, an electrodeposition coating film is not formed on the welding slag, and thus a coating defect is generated, and corrosion progresses starting from the defect.

Specifically, in members requiring corrosion resistance, such as automobile chassis members, electrodeposition coating is performed after welding assembly. When this electrodeposition coating is performed, if Si and Mn-based slag remains on the surface of a weld bead, the electrodeposition coating properties of that portion is degraded.

As a result, the corrosion resistance of the remaining portion of Si and Mn-based slag decreases. The reason why the electrodeposition coating properties degrades in the remaining portion of Si and Mn-based slag is because Si oxide or Mn oxide is an insulator and does not conduct electricity during coating, so the coating does not adhere to the entire surface.

Accordingly, there is a need for a welding material for reducing the amount of Si and Mn-based slag generated during gas shielded arc welding and improving electrodeposition coating properties.

### Disclosure

### Technical Problem

The present invention is directed to providing a low-slag wire with excellent weldability, which is capable of improving the electrodeposition coating properties of a bead surface of a weld zone.

### Technical Solution

One aspect of the present invention provides a low-slag wire with excellent weldability including: in weight % relative to the total weight of the wire, 0.001 to 0.30% of C, 0.001 to 0.10% of Si, 0.50 to 3.00% of Mn, 0.030% or less of P, 0.020% or less of S, one or more among 0.001 to 0.100% of Ni, 0.50% or less of Ti, 0.30% or less of Al, 0.50% or less of Nb, 0.10% or less of V and 0.10% or less of Zr, one or more among 0.001 to 0.100% of Cr, 0.001 to 0.500% of Mo and 0.50% or less of Cu, and the balance being Fe and inevitable impurities.

A sum of cleanliness degrees of non-metallic inclusions A, B, C and D of the wire may be 2.5 or less, wherein A may be a sulfide-based compound, B may be an alumina-based compound, C may be a silicate-based compound, and D may be a globular oxide.

In weight % relative to the total weight of a surface treatment agent, a surface treatment agent containing 0.20% to 0.30% of an alkali metal and 99.70 to 99.80% of a hydrocarbon compound having two types of functional groups selected from ester groups, carboxylic acid groups and alkane groups may be applied on the surface of the wire.

The alkali metal may be at least one element selected from a group consisting of sodium (Na), potassium (K), and calcium (Ca).

### Advantageous Effects

According to one aspect of the present invention, by appropriately controlling a component composition, it is possible to form a weld zone with excellent electrodeposition coating properties and mechanical properties (tensile strength, elongation, etc.).

In addition, the cleanliness degree and alkali metal content of a surface treatment agent are controlled, and thus excellent welding workability can be secured by reducing an amount of spatter generation and accumulation amount of foreign matter in a spring liner.

The effects of the present invention are not limited to the effects described above, and should be understood to include all effects that can be inferred from the configuration of the invention described in the detailed description or claims of the present invention.

### Description of Drawings

FIG. 1 shows a spatter generation amount according to cleanliness.
FIG. 2 is a photograph of a non-metallic inclusion in Inventive Example 2.
FIG. 3 is a photograph of a non-metallic inclusion in Inventive Example 3.
FIG. 4 is a photograph of a non-metallic inclusion in Comparative Example 1.
FIG. 5 is a photograph of a non-metallic inclusion in Comparative Example 2.
FIGS. 6 and 7 show a spatter generation amount and accumulation amount of foreign matter in a spring liner according to a concentration of an alkali metal.
FIG. 8A is a photograph showing an internal state of a spring liner in Inventive Example 10, and FIG. 8B is a photograph showing an internal state of a spring liner in Comparative Example 14.
FIG. 9A is a photograph of a spatter generation amount in Inventive Example 10, FIG. 9B is a photograph of a spatter generation amount in Comparative Example 7, and FIG. 9C is a photograph of a spatter generation amount in Comparative Example 11.
FIG. 10 is a diagram illustrating the EDS analysis results of Inventive Example 9.

### Modes of the Invention

Hereinafter, the present invention will be described with reference to the attached drawings. However, the present invention may be implemented in various different forms and, therefore, is not limited to the embodiments described herein. In order to clearly explain the present invention in the drawings, parts that are not related to the description have been omitted, and similar parts are given similar reference numerals throughout the specification.

Throughout the specification, when a part is referred to as being "connected" to another part, it includes not only the case in which the part and other part are "directly connected" but also a case in which the part and other part are "indirectly connected" with another member interposed therebetween. In addition, when a certain part "comprises" any component, this means that other components may be further provided, rather than excluding other components unless otherwise stated.

As used herein, terms including ordinal numbers such as "first" or "second" may be used to describe various components or steps, but those components or steps should not be limited by ordinal numbers. Terms including ordinal numbers should be interpreted only to distinguish one component or step from other components or steps.

Hereinafter, embodiments of the present invention will be described in detail with reference to the accompanying drawings.

One aspect of the present invention provides a low-slag wire with excellent weldability including, in weight % relative to the total weight of the wire, 0.001 to 0.30% of C, 0.001 to 0.10% of Si, 0.50 to 3.00% of Mn, 0.030% or less of P, 0.020% or less of S, one or more among 0.001 to 0.100% of Ni, 0.50% or less of Ti, 0.30% or less of Al, 0.50% or less of Nb, 0.50% or less of Nb, 0.10% or less of V and 0.10% or less of Zr, one or more among 0.001 to 0.100% of Cr, 0.001 to 0.500% of Mo and 0.50% or less of Cu, and the balance being Fe and inevitable impurities.

The composition of the low-slag wire with excellent weldability of the present invention and reasons for limiting its content are described, and the % described below means weight %.

### <Carbon (C): 0.001 to 0.30%>

C has an effect of stabilizing an arc and when the C content is less than 0.001%, the tensile strength of a deposited metal may not be obtained. Therefore, in the present invention, the C content is set to 0.001% or more.

Meanwhile, when the C content exceeds 0.30%, the viscosity of a molten pool decreases, resulting in a poor bead shape. Additionally, crack resistance is degraded as the deposited metal hardens. Therefore, in the present invention, the C content is set to 0.30% or less.

### <Silicon (Si): 0.001 to 0.10%>

In conventional welding wire, Si is actively added as a deoxidizing element. In addition, the tensile strength of the deposited metal is improved by promoting deoxidation of the molten pool during arc welding with Si.

However, in terms of electrodeposition coating properties, it is desirable to reduce the amount of insulating silicon oxide as much as possible. That is, when the silicon content exceeds 0.10%, as the amount of silicon-based slag increases, it may not be possible to manufacture a welding metal having excellent electrodeposition coating properties. Therefore, in the present invention, the Si content is set to 0.10% or less.

Meanwhile, in terms of the manufacturing costs of the wire or securing the stability of a bead shape, the Si content is set to 0.001% or more.

### <Manganese (Mn): 0.50 to 3.00%>

Mn, like Si, is a deoxidizing element and is an element that promotes deoxidation of the molten pool during arc welding and improves the tensile strength of the deposited metal. In the present invention, since the Si content, which is the main deoxidizing element in the wire, is kept very low, the content of Mn serving as a deoxidizer in a welded metal is specifically managed. Therefore, in the present invention, the Mn content is managed to be 3.00% or less.

Meanwhile, Mn combines with S in steel to form MnS to prevent the formation of FeS, which is a low-melting point compound, thereby preventing the occurrence of high-temperature cracks. In addition, pearlite is refined and the solid solution strengthening of ferrite causes yield strength to be increased. Therefore, in the present invention, the Mn content is set to 0.50% or more to maintain minimum yield strength.

### <Phosphorus (P): 0.030% or less>

P is an element that reduces the crack resistance of the weld metal, and thus the smaller the P content in the wire, the more preferable it is.

When the P content in the wire exceeds 0.030%, the required crack resistance may not be obtained. Therefore, in the present invention, the P content is set to 0.030% or less.

### <Sulfur (S): 0.020% or less>

S is an element having an effect of agglomerating slag. For example, when the S content in the wire is changed while the amount of slag is kept constant, as the S content increases, the slag agglomerates and the thickness increases, resulting in degraded electrodeposition coating properties, and thus the smaller the S content, the more preferable it is.

When the S content in the wire exceeds 0.020% by mass, it is difficult to uniformly form thin slag on the weld metal, and there is a risk that an electrodeposition coating film may not be formed or the slag may be peeled off. Therefore, in the present invention, the S content is set to 0.020% or less.

### <Nickel (Ni): 0.001 to 0.100%>

Ni is an austenite stabilizing element and effectively contributes to improving impact resistance. When Ni is less than 0.001%, the strength of the welded metal may not be secured. Therefore, in the present invention, Ni content is set to 0.001% or more.

Meanwhile, as nickel content increases, NiS compounds are generated at grain boundaries during a welding process, and these compounds have a low melting point of 630°C, thereby causing high-temperature cracks and adversely affecting weldability. Therefore, in the present invention, the Ni content is set to 0.100% or less.

### <Titanium (Ti): 0.50% or less>

Ti has very high resistance to corrosion and acts as an arc stabilizer at high current during welding. In addition, Ti is a slag generating element. Therefore, in the present invention, Ti content is set to 0.50% or less.

### <Aluminum (Al): 0.30% or less>

Al, along with Si, is useful as a deoxidizer in steel, but when the added amount thereof in the welded metal is large, it makes steel vulnerable. Therefore, in the present invention, Al content is set to 0.30% or less.

### <Niobium (Nb): 0.50% or less>

Nb may be contained to increase the quenchability of a weld zone and improve tensile strength, but when contained in excess, the elongation of the weld zone decreases. Therefore, in the present invention, Nb content is set to 0.5% or less.

### <Vanadium (V): 0.10% or less>

V may be contained to increase the quenchability of the weld zone and improve tensile strength, but when contained in excess, the elongation of the weld zone decreases. Therefore, in the present invention, V content is set to 0.10% or less.

### <Zirconium (Zr): 0.10% or less>

Zr has a high affinity for nitrogen, sulfur, carbon, and hydrogen and is commonly used to fix these elements. It is known that Zr can prevent the occurrence of white spots. Therefore, in the present invention, Zr content is set to 0.10% or less.

### <Chromium (Cr): 0.001 to 0.100%>

Cr increases the strength and hardness of the welded metal and facilitates the formation of carbides. In addition, corrosion resistance, heat resistance and wear resistance are increased. In order to maintain proper strength, it is desirable to limit a lower limit value of the content to 0.001% and an upper limit value to 0.100%.

### <Molybdenum (Mo): 0.001 to 0.500%>

Mo may be contained to increase the quenchability of the weld zone and improve tensile strength, but when contained in excess, the elongation of the weld zone decreases. Therefore, in the present invention, Mo content is set to 0.500% or less. Meanwhile, to ensure the strength of the welded metal, the Mo content is set to 0.001% or more.

### <Copper (Cu): 0.50% or less>

Cu increases the tensile strength and elastic limit of the deposited metal and increases corrosion resistance. However, since there is a risk of cracks during rolling, it is desirable to limit the upper limit value of the content to 0.50%.

Other remaining components are Fe and inevitable impurities.

Meanwhile, the composition of the wire of the present invention described above may be applied to solid wire or a flux cored wire (metal cored wire). Additionally, the wire of the present invention may also be used as a wire used in submerged arc welding (SAW).

According to a wire satisfying the component composition of the present invention, it is possible to form a weld zone with excellent electrodeposition coating properties and mechanical properties (tensile strength, elongation, etc.).

Meanwhile, non-metallic inclusions in steel materials are a factor that affects slag or spatter during welding, and the presence of large inclusions or multiple inclusions significantly affects the properties of steel. Accordingly, the present invention seeks to improve weldability by adjusting the cleanliness of the non-metallic inclusion.

Specifically, when the sum of the cleanliness degrees of the non-metallic inclusions exceeds 2.5, the spatter generation amount increases rapidly and weldability is impaired. Therefore, in the present invention, the sum of the cleanliness degrees of the non-metallic inclusion is set to 2.5 or less.

Hereinafter, the present invention will be described in detail through Example 1.

### (Example 1)

A clean wire and poor wire based on cleanliness were manufactured, welding was performed under the following conditions, and the amount of spatter generated during welding was investigated.

Downward welding was performed after placing a steel plate with a thickness of 12 mm, a width of 10 cm, and a length of 50 cm in a 80 cm x 15 cm x 20 cm box and under conditions of a wire diameter of 1.2 mm, a current of 210 A, a voltage of 25 V, a welding speed of 40 cm/min, and a shielding gas consisting of 80%Ar+20%CO₂.

Meanwhile, there are many methods for analyzing or evaluating inclusions. Representative methods include measuring inclusions based on standards such as KSD 0204, JIS G 0555, ASTM E 45, and ISO 4967.

In this embodiment, based on ASTM E-45 method A, a polished specimen having a diameter/2 (mm) x length (mm) = 200 mm² was placed under a microscope and the specimen parallel to a longitudinal direction was observed at a magnification of 100x. While inspecting the entire specimen, an index of a standard picture corresponding to the worst visual field was recorded by comparing the standard pictures of thin and thick series for each type of inclusion.

Here, the non-metallic inclusions may be largely classified into A, B, C, and D, and specifically, A may be a sulfide-based compound, B may be an alumina-based compound, C may be a silicate-based compound, and D may be a globular oxide.

The amount of spatter was quantitatively measured by welding a 40 cm long bead for 1 minute and collecting the amount of spatter generated during welding.

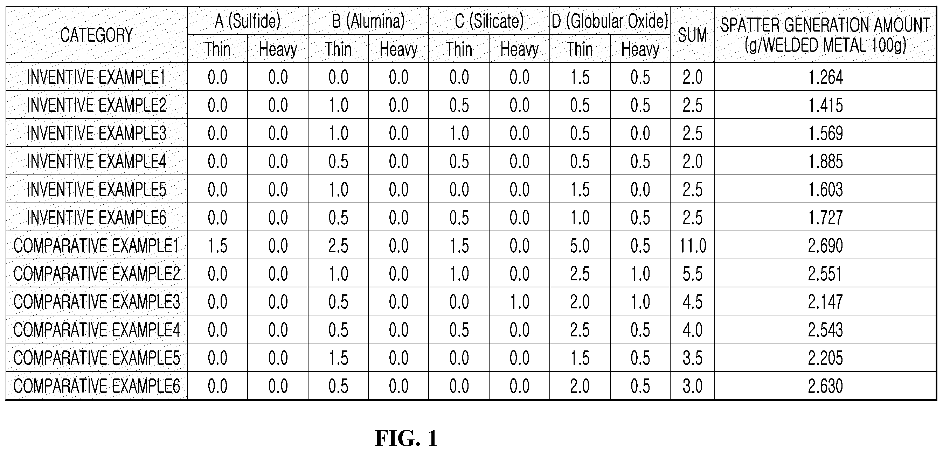

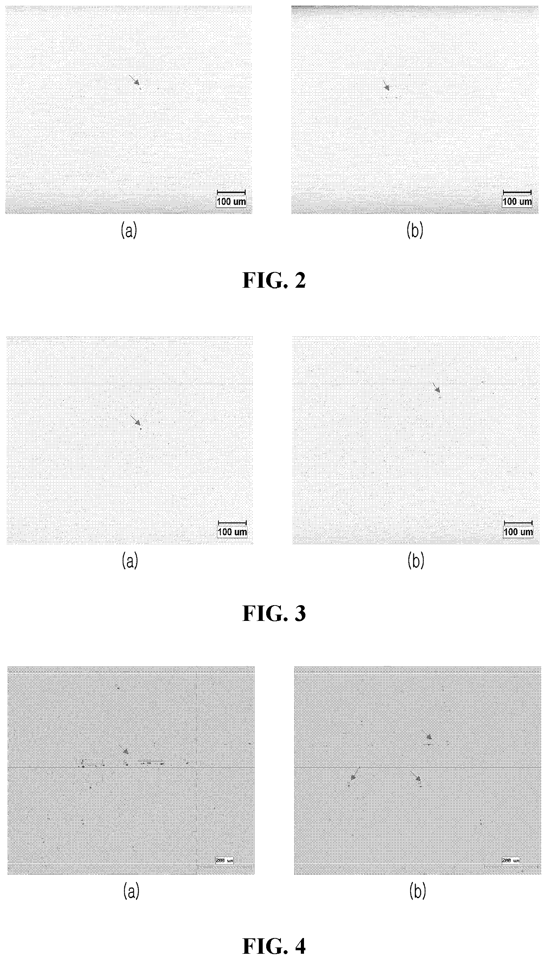

FIG. 1 shows a spatter generation amount according to cleanliness, FIG. 2 is a photograph of a non-metallic inclusion in Inventive Example 2, FIG. 3 is a photograph of a non-metallic inclusion in Inventive Example 3, and FIG. 4 is a photograph of a non-metallic inclusion in Comparative Example 1.

As shown in FIGS. 1 to 5, in the case of Inventive Examples 1 to 6 in which the sum of the cleanliness degrees of the non-metallic inclusions A, B, C, and D satisfies 2.5 or less, the spatter generation amount is reduced in all cases.

On the other hand, in the case of Comparative Examples 1 to 6 in which the sum of the cleanliness degrees of the non-metallic inclusions A, B, C and D exceeded 2.5, the spatter generation amount increased by about 14 to 113% compared to the Inventive Example. Therefore, when the sum of the cleanliness degrees of the non-metallic inclusions A, B, C, and D of the wire is controlled to 2.5 or less, it can be seen that excellent welding workability may be secured by reducing the spatter generation amount.

Preferably, when the sum of the cleanliness degrees of the non-metallic inclusions of the wire is controlled to 2.5 or less, it can be seen that excellent welding workability may be secured by reducing the spatter generation amount.

Meanwhile, in general, a wire for gas metal arc welding is transferred through a spring liner inside a welding torch through a feeding roller and transferred from the end of the torch to a base material to perform welding.

In order for welding to proceed stably, the welding wire should be supplied to the welding area at a constant speed. However, when foreign matter in the spring liner accumulates, friction is generated in the spring liner, which hinders wire transfer and degrades weldability during long-term welding.

Accordingly, in the present invention, a surface treatment agent containing an alkali metal is applied on a surface of the wire in order to reduce the spatter generation amount and improve arc stability. Alkali metals increase arc stability and reduce the spatter generation amount. The alkali metal preferably includes at least one element selected from a group consisting of Na, K, and Li.

Specifically, when the alkali metal content of the surface treatment agent is less than 0.20%, the spatter generation amount increases and welding workability decreases. Therefore, the alkali metal content of the surface treatment agent is 0.20% or more. Preferably, the alkali metal content of the surface treatment agent may be 0.26% or more.

Meanwhile, when the alkali metal content of the surface treatment agent exceeds 0.30%, the spatter generation amount remains constant, but the accumulation amount of foreign matter in the spring liner rapidly increases. Therefore, the alkali metal content of the surface treatment agent is 0.30% or less.

In addition, based on the total weight of the surface treatment agent, a hydrocarbon compound having two types of functional groups selected from ester groups, and carboxylic acid groups, and alkane groups may be contained at 99.70 to 99.80%. The hydrocarbon compound dissolves metal salts in the surface treatment oil and forms a strong rust-prevention film and a homogeneous liquid film on the surface of the wire.

Preferably, the surface treatment agent may be applied on the surface of the wire in an amount of 0.03 to 0.60 g per 1 kg of wire.

Hereinafter, the present invention will be described in detail through Example 2.

### (Example 2)

Surface treatment agents having different concentrations of alkali metals were applied on the surface of the wire, which satisfies the composition range of the present invention, at 0.03g per 1kg of wire: the wire including 0.08% C, 0.10% Si, 1.5% Mn, 0.010% P, 0.020% S, 0.100% Ni, 0.100% Cr and the balance being Fe and inevitable impurities. Then, the spatter generation amount and the amount of foreign matter accumulated in the spring liner were evaluated according to the concentration of alkali metal.

Downward welding was performed after placing a steel plate with a thickness of 12 mm, a width of 10 cm, and a length of 50 cm in a 80 cm x 15 cm x 20 cm box and under conditions of a wire diameter of 1.2 mm, a current of 210 A, a voltage of 25 V, a welding speed of 40 cm/min, and a shielding gas consisting of 80%Ar+20%CO₂.

The amount of spatter is quantitatively measured by welding a 40 cm long bead for 1 minute and collecting the amount of spatter generated during welding.

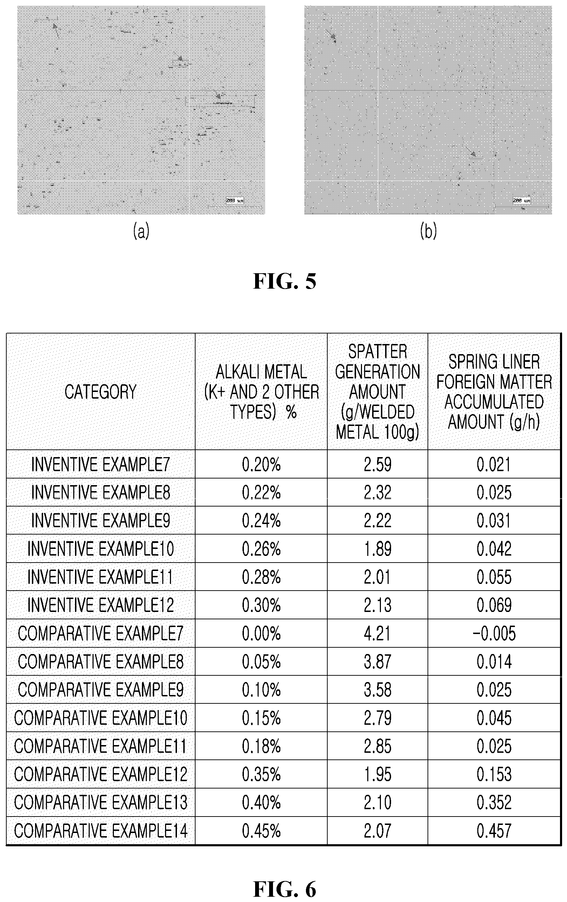

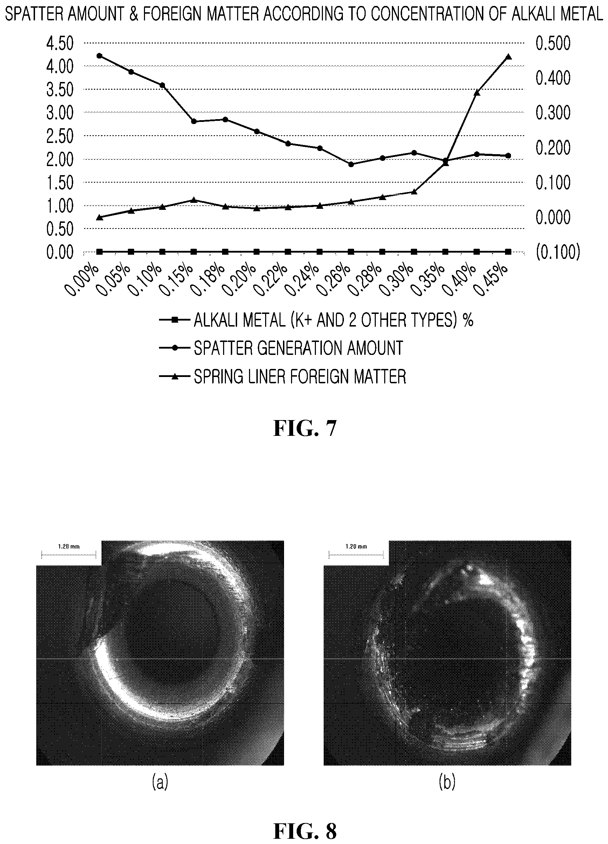

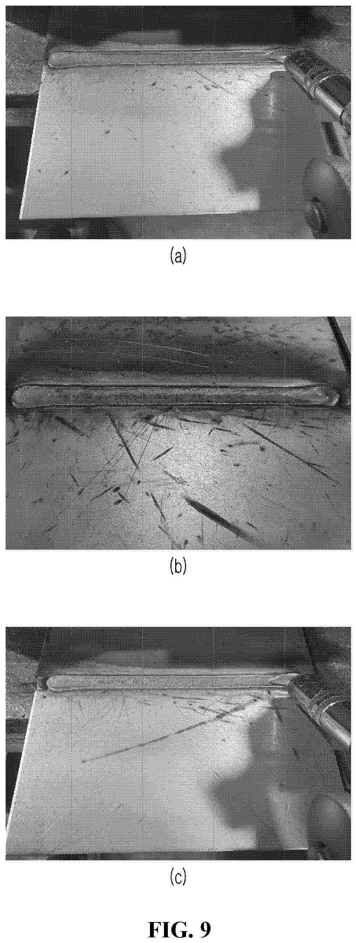

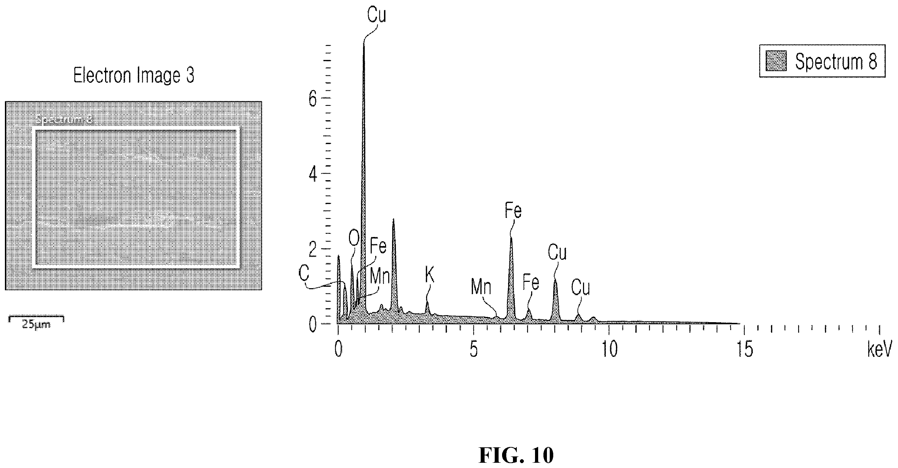

FIGS. 6 and 7 show the spatter generation amount and accumulation amount of foreign matter in a spring liner according to the concentration of an alkali metal, FIG. 8A is a photograph showing an internal state of a spring liner in Inventive Example 10, and FIG. 8B is a photograph showing an internal state of a spring liner in Comparative Example 14, FIG. 9A is a photograph of a spatter generation amount in Inventive Example 10, FIG. 9B is a photograph of a spatter generation amount in Comparative Example 7, and FIG. 9C is a photograph of a spatter generation amount in Comparative Example 11, and FIG. 10 is a diagram illustrating the EDS analysis results of Inventive Example 9.

As shown in FIGS. 6 to 10, in the case of Inventive Example 7 to 12, in which a surface treatment agent satisfying the alkali metal content of 0.20% or more and 0.30% or less was applied, the spatter generation amount was reduced and the accumulation amount of foreign matter in the spring liner was also reduced.

On the other hand, in Comparative Examples 9 to 11, in which the surface treatment agent containing less than 0.20% of alkali metal was applied, the accumulation amount of foreign matter in the spring liner was reduced, but the spatter generation amount was confirmed to have increased.

In Comparative Examples 12 to 14, in which a surface treatment agent containing more than 0.30% of alkali metal was applied, the spatter generation amount was reduced, but the accumulation amount of foreign matter in the spring was confirmed to have increased rapidly.

Therefore, when a surface treatment agent containing 0.20% to 0.30% of alkali metal and 99.70 to 99.80% of a hydrocarbon compound having two types of functional groups selected from ester groups, carboxylic acid groups, and alkane groups is applied on the surface of the wire, it can be seen that excellent welding workability may be secured by reducing the spatter generation amount and accumulation amount of foreign matter in the spring liner.

The description of the present invention described above is for illustrative purposes, and those skilled in the art will understand that the present invention may be easily modified into other specific forms without changing the technical idea or essential features of the present invention. Therefore, the embodiments described above should be understood in all respects as illustrative and not restrictive. For example, each component described as unitary may be implemented in a distributed manner, and similarly, components described as distributed may also be implemented in a combined form.

The scope of the present invention is indicated by the claims described below, and all changes or modified forms derived from the meaning and scope of the claims and their equivalent concepts should be construed as being included in the scope of the present invention.

## Claims

1. A low-slag wire with excellent weldability, comprising:
in weight % relative to a total weight of the wire,
0.001 to 0.30% of C;
0.001 to 0.10% of Si;
0.50 to 3.00% of Mn;
0.030% or less of P;
0.020% or less of S;
one or more among 0.001 to 0.100% of Ni; 0.50% or less of Ti, 0.30% or less of Al, 0.50% or less of Nb, 0.10% or less of V and 0.10% or less of Zr;
one or more among 0.001 to 0.100% of Cr, 0.001 to 0.500% of Mo and 0.50% or less of Cu; and
the balance being Fe and inevitable impurities.

2. The low-slag wire of claim 1, wherein a sum of cleanliness degrees of non-metallic inclusions A, B, C and D of the wire is 2.5 or less, wherein A is a sulfide-based compound, B is an alumina-based compound, C is a silicate-based compound, and D is a globular oxide.

3. The low-slag wire of claim 1, wherein
in weight % relative to the total weight of a surface treatment agent,
a surface treatment agent containing 0.20% to 0.30% of an alkali metal and 99.70 to 99.80% of a hydrocarbon compound having two types of functional groups selected from ester groups, carboxylic acid groups and alkane groups is applied on the surface of the wire.

4. The low-slag wire of claim 3, wherein the alkali metal is at least one element selected from a group consisting of sodium (Na), potassium (K), and calcium (Ca).
